# EUROPÄISCHE PATENTSCHRIFT

(11) **EP 0 497 437 B1**
(45) Veröffentlichungstag und Bekanntmachung des Hinweises auf die Patenterteilung: **24.05.1995**
(21) Anmeldenummer: 92250016.0
(22) Anmeldetag: 21.01.1992
(51) Int. Cl.: B29C 45/40

(54) **Vorrichtung zum Auswerfen von Formteilen aus einer Spritzgiessmaschine**
Apparatus for ejecting moulded pieces from an injection moulding machine
Dispositif pour éjecter des pièces moulées d'une machine à mouler par injection

(30) Priorität: 01.02.1991 DE 4103446
(43) Veröffentlichungstag der Anmeldung: 05.08.1992
(73) Patentinhaber: MANNESMANN Aktiengesellschaft, 40027 Düsseldorf (DE)
(72) Erfinder: Landstorfer, Hans, W-8500 Nürnberg 40 (DE)
(74) Vertreter: Meissner, Peter E., Dipl.-Ing.

(56) Entgegenhaltungen:
- EP-A- 0 179 724
- EP-A- 0 233 113
- EP-A- 0 336 808
- BE-A- 434 744
- PATENT ABSTRACTS OF JAPAN vol. 13, no. 13 (M-783)(3361) 12. Januar 1989 & JP-A-63 222 828 (SUMITOMO HEAVY IND LTD)

## Beschreibung

Die Erfindung betrifft eine Vorrichtung zum Auswerfen von Formteilen aus einer Spritzgießmaschine mit einer lateral bewegbaren Auswerferstange, an die ein Auswerter kuppelbar ist.

Aus der DE-OS 35 42 878 ist eine Auswerfeinrichtung für Spritzgießmaschinen bekannt, bei der an einer Auswerferplatte hydraulisch betätigbare Auswerferstifte angeordnet sind. Die Auswerferstifte sind dabei durch Schraubverbindungen an dem Kolben eines hydraulischen Antriebs mit der Auswerfeinrichtung befestigt.

Diese lösbare Schraubverbindung gibt keinen Hinweis auf eine leicht trennbare, ohne manuellen Eingriff mögliche Verbindung. Zum Auseinanderschrauben wird der komplette Demontagehub benötigt.

Aus der gattungsbildenden EP-OS 02 33 113 ist eine Kupplung für eine Auswurfeinrichtung bekannt, bei der eine kolbenförmige Stange in eine Hülse einsteckbar und durch radial verschiebbare Stifte formschlüssig arretierbar ist.

Bei dieser Kupplungsform wird zum Entkuppeln der volle Weg entsprechend der Überdeckung von Vater- und Mutterteilen benötigt. Dieser Weg fehlt nach dem Ankuppeln dem maschinenseitig möglichen Auswerferhub. Die rein formschlüssige Verbindung der aus dieser Schrift bekannten Kupplung hat weiterhin den Nachteil, daß zwischen den zu verbindenen Bauteilen ein Spiel und darüber hinaus ein Verdrehen der Kupplungsstange relativ zur Kolbenstange möglich ist.

In Kenntnis der genannten Nachteile hat sich nie Erfindung zum Ziel gesetzt, einen Auswerfer mit einer kompakten, eine spielfreie Kraftübertragung ermöglichenden Kupplung zu schaffen, die leicht trennbar ist und dabei maschinenseitig keinen über den Auswerferhub hinaus erforderlichen Verfahrweg benötigt.

Die Erfindung erreicht dieses Ziel durch die Merkmale des Anspruchs 1. Die Unteransprüche enthalten vorteilhafte Ausgestaltungen der Auswurfeinrichtung.

Der erfindungsgemäße Auswerfer weist eine Hülsenkupplung auf. Die Hülse ist dabei vorzugsweise an der Werkzeuggrundplatte befestigt und axial so angeordnet, daß sie nur in geringem Maße und damit behinderungsarm in den Freiraum zwischen der Grundplatte und dem Auswerferzylinder hineinragt.

In die Hülse ist der Kopf der Auswerferstange einführbar. Die Auswerferstange weist dabei kopfseitig eine teleskopförmig ausziebare kupplungsstange auf, deren Ende maßlich mit der Hülse korrespondiert.

Der Antrieb zum lateralen Bewegen der Kupplungsstange wird vorzugsweise hydraulisch betätigt, wobei die üblicherweise vorhandene Hydraulik mitbenutzt wird.

Im gekuppelten Zustand werden an dem vorderen Teil der Kupplungsstange radial nach außen gerichtete Kräfte aufgebracht, die über die Formanpassung hinaus Klemmkräfte zwischen Hülse und Stange wirken lassen. Diese Kräfte sind ausreichend hoch, da eine relativ große Kolbenfläche zur Verfügung steht.

In baulich einfacher Weise wird dieses form- und kraftschlüssige Verbinden durch eine in die hülsenförmig ausgestaltete Kupplungsstange zentrisch eingebrachte Betätigungsstange erreicht.

Das kopfseitige Ende der Betätigungsstange ist dabei konisch angespitzt. Der Konus korrespondiert mit der vorzugsweise ebenfalls konisch ausgebildeten Innenflache der hülsenförmigen Kupplungsstange. Zur einfachen Durchmesservergrößerung des Kupplungsstangenkopfes sind in axiale Richtung weisende Schlitze vorgesehen.

Bei der im gekuppelten Zustand form- und kraftschlüssig verbundenen Kopfenden der Kupplungsstange mit der Betätigungsstange und der Kupplungshülse ist jegliches kupplungsspiel verhinderbar. Eine hohe Betriebssicherheit ist dadurch gewährleistet. Darüber hinaus ist bei einfachem Aufbau eine hohe Reproduzierbarkeit des Kupplungsvorganges möglich.

Im Gegensatz zu vergleichbaren Auswerfern an Spritzgießmaschinen, bei denen der Hauptkolben zum Kuppeln eingesetzt wird, geht bei der vorliegenden schaltbaren Kupplung keinerlei Weg im Endlagenbereich in der Offenphase verloren. Gerade der hintere Bereich, nämlich der Abstand des Zylinderbodens zur Kolbengrundfläche des Hauptkolbens, wird bei der Endlagendämpfung des Auswerfers benötigt.

Eine Betätigungsstange ist zusätzlich neben dem Betätigungskolben noch anordnenbar, der in der Endlage der Stellung "gekuppelt" ein einfaches Lösen der Kupplungskolben vom Betätigungskolben ermöglicht.

Ein Beispiel der Erfindung ist in der beigefügten Zeichnung dargelegt. Es zeigen:
- Fig. 1: Übersicht der Auswerfervorrichtung,
- Fig. 2: Auswerfervorrichtung in entkuppelter Position,
- Fig. 3: Auswerfervorrichtung in gekuppelter Position.

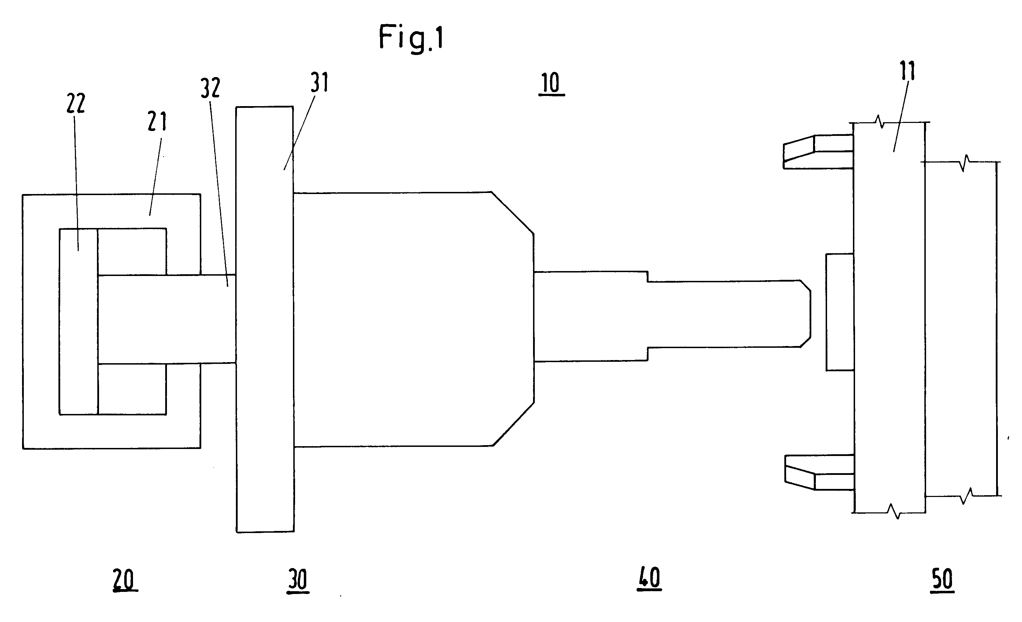

In der Fig. 1 ist ein Teil einer Werkzeuggrundplatte 11 einer nicht weiter dargestellten Spritzgießmaschine aufgezeigt. In Richtung der Zentralachse I ist ein Zylinder 21 der Auswerfervorrichtung 20 skizzenhaft dargestellt. Im Zylinder 21 ist ein Kolben 22 angeordnet, an dem eine Kolbenstange 31 einer Auswerferstange 30 befestigt ist. Am Kopfende der Kolbenstange 32 ist an einer Auswerferplatte 31 eine Kupplung 40 angeordnet.

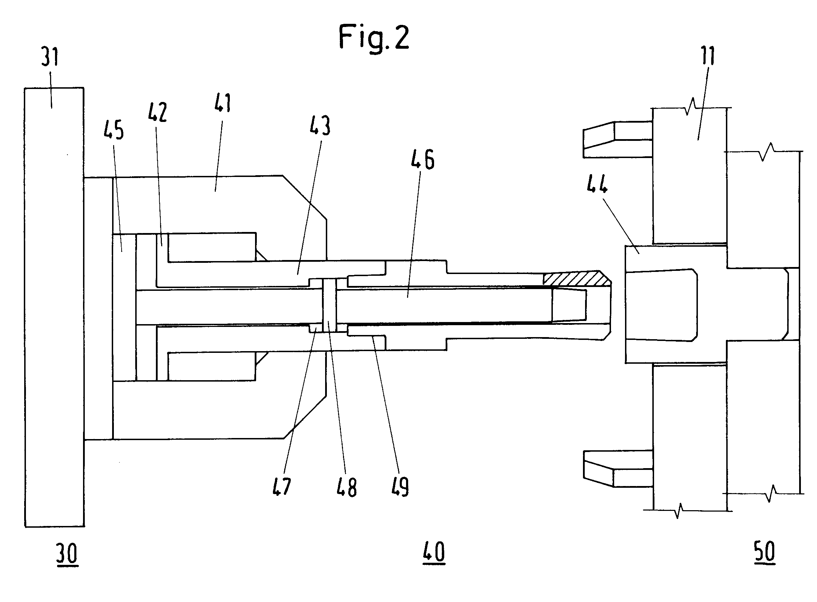

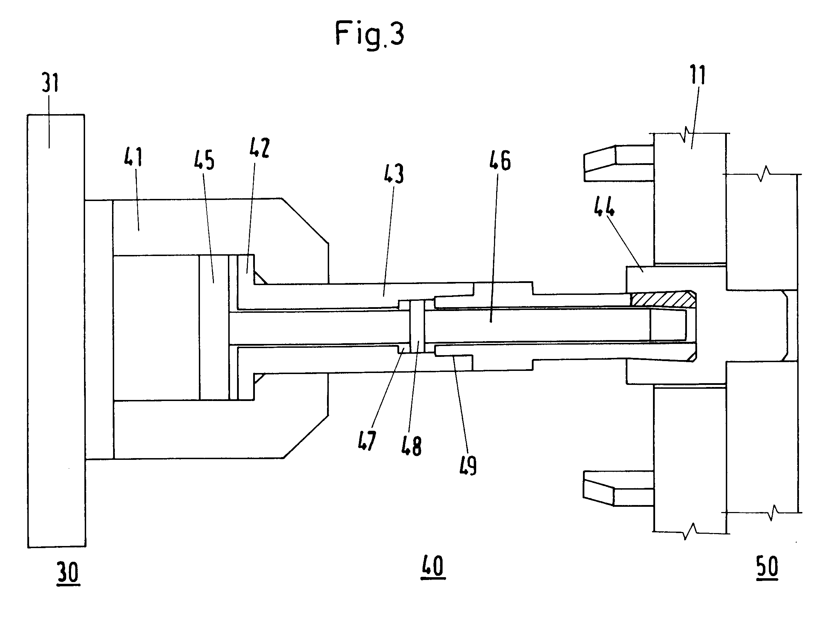

Die Fig. 2 und 3 zeigen im Detail den Aufbau der Kupplung 40, die mit einer nur skizzenhaft dargestellten Auswerferplatte 50 verbunden ist. Die als Hülsenkupplung ausgeführte Kupplung 40 weist dabei eine Kupplungshülse 44 auf, die durch eine Werkzeuggrundplatte 11 der Spritzgießmaschine in Richtung der Achse der Hülse führbar ist. Das der Auswerferplatte 31 abgewandte Ende der Kupplungshülse 44 ist in der Auswerferplatte 50 gehaltert.

In die Kupplungshülse 44 ist der Kopf einer Kupplungsstange 43 einführbar. Die Kupplungsstange 43 hat an dem der Hülse 44 abgewandten Ende einen Kupplungskolben 42, der in einem Kupplungszylinder 41 angeordnet ist.

Der Kupplungszylinder 41 ist an der Auswerferplatte 31 befestigt.

Die Kupplungsstange 43 ist als Rohr ausgebildet. In der rohrförmigen Kupplungsstange 43 ist eine Betätigungsstange 46 linear bewegbar. Die Betätigungsstange 46 ist kopfseitig, konisch angespitzt und weist fußseitig einen Betätigungskolben 45 auf, der zusätzlich zum Kupplungskolben 42 im Kupplungszylinder 41 angeordnet ist.
Durch eine Relativverschiebung von Kupplungsstange 43 und Befestigungsstange 46 zueinander wird der Kopfbereich der Kupplungsstange 43 nach dem Einstecken in die Hülse 44 aufgeweitet, so daß damit eine kraft- und formschlüssige Verbindung erreicht wird. Die Kupplungsstange 43 weist eine Teilfuge 49 auf, an der die Kupplungsstange axial trennbar ist.

An der Betätigungsstange ist ein Ringkolben 48 vorgesehen, der in einer in die hülsenförmige Kupplungsstange 43 eingearbeiteten Kammer 47 bewegbar ist. Dieser kleine Ringkolben 48 unterstützt die Verschiebung der Betätigungsstange 46 relativ zu der Kupplungsstange 43, insbesondere wenn die beiden Kolben 45 und 42 sehr dicht aneinanderliegen.

## Patentansprüche

1. Vorrichtung zum Auswerfen von Formteilen aus einer Spritzgießmaschine, mit einer linear bewegbaren Auswerferstange, an die ein Auswerfer kuppelbar ist,
dadurch gekennzeichnet,
daß eine schaltbare, teleskopförmige Hülsenkupplung (40) vorgesehen ist, die den Auswerfer (50) mit der Auswerferstange (30) form- und kraftschlüssig verbindet.

2. Vorrichtung zum Auswerfen nach Anspruch 1,
dadurch gekennzeichnet,
daß die Kupplung (40) einen Hydraulik-Zylinder (41) aufweist, in dem ein Kupplungskolben (42), der mit einer Kupplungsstange (43) versehen ist, bewegbar ist, deren kopfseitiges Ende axial in eine mit dem Auswerfer (50) verbundene Kupplungshülse (44) einsteckbar und dann arretierbar ist.

3. Vorrichtung zum Auswerten nach Anspruch 2,
dadurch gekennzeichet,
daß die Kupplungskolbenstange (43) ein Rohr ist, in dem eine mit einem Betätigungskolben (45) versehene Betätigungsstange (46) axial verschiebbar ist.

4. Vorrichtung zum Auswerfen nach Anspruch 3,
dadurch gekennzeichnet,
daß das kopfseitige Ende der rohrförmigen Kupplungskolbenstange (43) eine radial nach innen weisende Verdickung der Rohrwand besitzt.

5. Vorrichtung zum Auswerfen nach Anspruch 3,
dadurch gekennzeichnet,
daß die Betätigungsstange (46) kopfseitig konisch angespitzt ist.

6. Vorrichtung zum Auswerfen nach Anspruch 2,
dadurch gekennzeichnet,
daß die Kupplungshülse (44) der Kupplungskolbenstange (43) zugewandt eine radial nach innen weisende Verengung aufweist.

7. Vorrichtung zum Auswerten nach den Ansprüchen 4 bis 6,
dadurch gekennzeichnet,
daß die im eingekuppelten Betriebszustand sich berührenden Flächen der Kupplungshülse (44) und der Kupplungsstange (43) sowie der Betätigungsstange (46) in der Weise angepaßt sind, daß bei in die Kupplungshülse (44) eingesteckter Kupplungsstange (43) und hülsenwärts verfahrener Betätigungsstange (46) eine Relativbewegung Zwischen dem Auswerfer (50) und der Auswerferstange (30) verhindert wird.

8. Vorrichtung zum Auswerfen nach Anspruch 4,
dadurch gekennzeichnet,
daß an der rohrförmigen Kupplungsstange (43) im Bereich der Verdickung in axialer Richtung weisende Schlitze vorgesehen sind.

9. Vorrichtung zum Auswerfen nach Anspruch 3,
dadurch gekennzeichnet,
daß die rohrförmige Kupplungsstange (43) radial teilbar ist und im Bereich der Teilfuge (49) eine ringförmige Kammer (47) aufweist.

10. Vorrichtung zum Auswerfen nach Anspruch 9,
dadurch gekennzeichnet,
daß an der Betätigungsstange (46) ein Ringkolben (48) vorgesehen ist, der in der Kammer (47) axial bewegbar ist.

## Claims

1. Device for ejecting moulded parts from an injection moulding machine, with an ejector rod which can move in linear fashion and to which an ejector can be coupled,
characterised in that a loose, telescope-type sleeve coupling (40) is provided which connects the ejector (50) positively and non-positively to the ejector rod (30).

2. Ejecting device according to claim 1,
characterised in that the coupling (40) comprises a hydraulic cylinder (41), in which a coupling piston (42), which is provided with a coupling rod (43), can move, the head end of which rod can be inserted axially in a coupling sleeve (44), which is connected to the ejector (50), and then secured.

3. Ejecting device according to claim 2,
characterised in that the coupling piston rod (43) is a tube in which an actuating rod (46), which is provided with an actuating piston (45), is axially displaceable.

4. Ejecting device according to claim 3,
characterised in that the tubular wall of the head end of the tubular coupling piston rod (43) has a thickened portion which points radially inwards.

5. Ejecting device according to claim 3,
characterised in that the actuating rod (46) tapers like a cone at the head end.

6. Ejecting device according to claim 2,
characterised in that, in the direction of the coupling piston rod (43), the coupling sleeve (44) has a narrowed portion which points radially inwards.

7. Ejecting device according to claims 4 to 6,
characterised in that the surfaces of the coupling sleeve (44), of the coupling rod (43) and of the actuating rod (46) which contact one another in the engaged operating state are adapted such that, when the coupling rod (43) is inserted in the coupling sleeve (44) and the actuating rod (46) has travelled towards the sleeve, there is no possibility of relative movement between the ejector (50) and the ejector rod (30).

8. Ejecting device according to claim 4,
characterized in that the tubular coupling rod (43) is provided with slits which point in the axial direction in the region of the thickened portion.

9. Ejecting device according to claim 3,
characterized in that the tubular coupling rod (43) can be radially divided and comprises an annular chamber (47) in the region of the joint (49).

10. Ejecting device according to claim 9,
characterized in that an annular piston (48), which can move axially in the chamber (47), is provided on the actuating rod (46).

## Revendications

1. Dispositif pour l'éjection de pièces hors d'une machine de coulage par injection, avec une tige d'éjection à mouvement linéaire à laquelle peut être accouplé un éjecteur, caractérisé en ce qu'il est prévu un accouplement télescopique à godet (40) et à commande qui réunit l'éjecteur (50) à la tige d'éjection (30) par friction ainsi que par enclenchement.

2. Dispositif d'éjection selon la revendication 1, caractérisé en ce que l'accouplement (40) comporte un cylindre hydraulique (41) dans lequel se meut un piston accoupleur (42) muni d'une tige d'accouplement (43) et dont l'extrémité antérieure peut être engagée et bloquée dans un godet d'accouplement (44) réuni à l'éjecteur (50).

3. Dispositif d'éjection selon la revendication 2, caractérisé en ce que la tige d'accouplement (43) est un tube dans lequel une barre d'entraînement (46) munie d'un piston d'entraînement (45) est déplaçable axialement.

4. Dispositif d'éjection selon la revendication 3, caractérisé en ce que l'extrémité antérieure de la tige d'accouplement tubulaire (43) comporte un épaississement de la paroi du tube dirigée vers l'intérieur.

5. Dispositif d'éjection selon la revendication 3, caractérisé en ce que la barre d'entraînement (46) s'effile en forme de cône à son extrémité antérieure.

6. Dispositif d'éjection selon la revendication 2, caractérisé en ce que le godet d'accouplement (44) comporte un rétrécissement dirigé radialement vers l'intérieur en direction de la tige d'accouplement (43)

7. Dispositif d'éjection selon les revendications 4 à 6, caractérisé en ce que les surfaces du godet d'accouplement (44) et de la tige d'accouplement (43) ainsi que de la barre d'entraînement (46) qui se touchent en position accouplée sont conformées de manière à empêcher un mouvement relatif entre l'éjecteur (50) et la tige d'éjection (30) lorsque la tige d'accouplement (43) est engagée dans le godet d'accouplement (44) et que la barre d'entraînement (46) est déplacée en direction du godet.

8. Dispositif d'éjection selon la revendication 4, caractérisé en ce qu'à l'endroit de l'épaississement la tige d'accouplement tubulaire (43) comporte des fentes orientées en direction axiale.

9. Dispositif d'éjection selon la revendication 3, caractérisé en ce que la tige d'accouplement tubulaire (43) est décomposable radialement et comprend une chambre tubulaire (47) à proximité de l'interstice de séparation (49).

10. Dispositif d'éjection selon la revendication 9, caractérisé en ce qu'un piston annulaire (48) axialement mobile dans la chambre (47) est prévu sur la barre d'entraînement (46).
